# DEMANDE DE BREVET EUROPEEN

(11) **EP 4 020 050 A1**
(43) Date de publication de la demande: **29.06.2022**
(21) Numéro de dépôt: 21217217.5
(22) Date de dépôt: 23.12.2021
(51) Int. Cl.: G02B 6/44

(54) **RÉSEAU DE TUBES POUR CÂBLES OPTIQUES**

(30) Priorité: 23.12.2020 FR 2014106
(71) Demandeur: Nexans, 92400 Courbevoie (FR)
(72) Inventeur: DUBUET, Eloïse, 75013 Paris (FR); HÄHNER, Thomas, 91370 Verrieres le Buisson (FR)
(74) Mandataire: Ipsilon

(57) **Abrégé**

L'invention concerne un ensemble comprenant un tube et au moins un câble optique, ledit câble optique étant placé à l'intérieur dudit tube, ledit tube possède un diamètre intérieur D et le câble optique possède un diamètre extérieur d, le rapport d/D allant de 0,10 à 0,80.

## Description

La présente invention concerne un ensemble comprenant un tube et au moins un câble optique ainsi qu'un réseau comprenant un ou plusieurs ensembles.

La fibre optique est de plus en plus utilisée pour la transmission d'informations notamment dans le secteur des télécommunications ou des réseaux informatiques. Les fibres optiques sont en général installées dans des câbles à fibres optiques ou câbles optiques pouvant comprendre une à plusieurs dizaines de fibres optiques en fonction des besoins.

Les câbles optiques sont en général installés dans des tubes ou microtubes pouvant varier selon le type de câbles optiques qu'ils doivent contenir et surtout selon le lieu dans lequel le tube est destiné à être installé (extérieur, sous-terrain, véhicule...). L'installation d'un câble optique dans un tube est en général réalisée par soufflage ou en poussant le câble optique dans le tube.

Le document EP1818703 décrit des câbles optiques comprenant une pluralité de fibres optiques entourées d'un tube de protection. Les câbles optiques sont alors chacun placés dans un microconduit puis plusieurs microconduits sont eux-mêmes placés à l'intérieur d'un conduit pouvant alors être installé sur le lieu souhaité.

Un tel réseau comprend ainsi différents éléments de protection pour les fibres optiques, à savoir les tubes, les microconduits et les conduits. Cependant, ce réseau présente l'inconvénient d'être lourd et encombrant en raison du nombre important d'éléments de protection par rapport au nombre de fibres optiques qu'il contient. Ce type de réseau ne peut donc pas être utilisé dans certains domaines comme celui de l'aéronautique.

En effet, dans le secteur de l'aéronautique, les câbles optiques et les tubes doivent répondre à certaines contraintes et notamment posséder une bonne résistance mécanique, une bonne résistance au feu et à des conditions de température et de pression extrêmes, et ce, tout en formant un réseau léger et compact. Par ailleurs, afin de faciliter leur maintenance, les câbles optiques doivent pouvoir être facilement installés et remplacés.

La présente invention a donc pour but de développer un ensemble comprenant un tube et au moins une fibre optique et permettant de s'affranchir d'au moins un des inconvénients précités.

La présente invention a pour premier objet un ensemble comprenant un tube et au moins un câble optique, ledit câble optique étant placé à l'intérieur dudit tube, l'ensemble étant caractérisé en ce que le tube possède un diamètre intérieur D et en ce que le câble optique possède un diamètre extérieur d, le rapport d/D allant de 0,10 à 0,80, de préférence de 0,20 à 0,65, de préférence de 0,25 à 0,55, et de façon encore plus préférée de 0,30 à 0,45.

L'ensemble de l'invention possède un rapport d/D optimisé et présente donc un volume et un poids réduits lui permettant d'être utilisé dans des lieux ou l'espace est limité, comme par exemple dans le domaine de l'aéronautique.

Par ailleurs, le diamètre du tube est suffisamment grand, par rapport à celui du câble optique pour que ce dernier puisse être glissé dans le tube lors de son installation et/ou de sa désinstallation, et suffisamment petit pour éviter tout pliage ou torsion du câble optique lorsque ce dernier est glissé dans le tube.

Ainsi, l'ensemble de l'invention permet une installation et une maintenance facilitée des câbles optiques. Par exemple, des tubes peuvent être installés à l'endroit souhaité et les câbles optiques peuvent être ajoutés ou enlevés lorsque c'est nécessaire tout en laissant les tubes en place. Au contraire, dans les dispositifs de l'art antérieur, les câbles optiques sont placés dans des harnais et il est nécessaire de démonter l'ensemble des câbles pour intervenir sur un câble ou en installer un.

L'ensemble de l'invention présente ainsi une grande souplesse d'installation.

A l'intérieur du tube, les câbles optiques peuvent être identiques ou différents et sont entourés d'air.

Selon un mode de réalisation possible, le tube peut posséder une surface intérieure ayant un coefficient de frottement statique µs1 et le câble optique peut posséder une surface extérieure ayant un coefficient de frottement statique µs2, la différence entre µs1 et µs2 ayant une valeur absolue allant de 0,05 à 0,70, de préférence allant de 0,05 à 0,50, et de façon encore plus préférée allant de 0,05 à 0,30. Il est ainsi possible d'insérer un câble optique à l'intérieur du tube et de commencer à le faire glisser pour son installation en ne rencontrant qu'une faible résistance de la surface intérieure du tube. Le câble optique peut ainsi être inséré sans subir de contrainte mécanique (résistance, pliure, torsion...) et donc sans risquer d'être endommagé. De même, il est possible de retirer le câble optique du tube sans l'endommager.

Selon un mode de réalisation possible, le tube peut posséder une surface intérieure ayant un coefficient de frottement dynamique µd1 et le câble optique peut posséder une surface extérieure ayant un coefficient de frottement dynamique µd2, la différence entre µd1 et µd2 ayant une valeur absolue allant de 0,05 à 0,70, de préférence allant de 0,05 à 0,50, et de façon encore plus préférée allant de 0,05 à 0,30. Ce coefficient de frottement dynamique étant faible, il est possible de pousser le câble optique à l'intérieur du tube ou au contraire de le retirer sans qu'il ne se plie ou ne se torde. Le câble optique peut par exemple être poussé sur une longueur pouvant aller jusqu'à 25 mètres (m), et ce, même si le tube comporte des zones courbure ou des coudes.

### Le tube

Le diamètre intérieur D du tube peut avoir une valeur allant de 1 millimètre (mm) à 8 mm, de préférence de 2 mm à 6 mm, et de façon particulièrement préférée de 2,5 mm à 4 mm.

Un tel diamètre permet au tube d'accueillir dans son espace intérieur un nombre de câbles optiques pouvant aller de 1 à 50. Le nombre de câbles optiques pouvant être insérés dans un tube peut dépendre notamment du type de câbles optiques, de l'utilisation souhaitée des câbles optiques, du diamètre d de chaque câble éventuellement présent dans le tube, et/ou du diamètre du câble optique que l'on souhaite ajouter.

L'ensemble du tube et des câbles optiques insérés à l'intérieur du tube est ainsi optimisé puisqu'il permet de loger un nombre de câbles optiques suffisamment élevé dans un tube présentant un encombrement limité.

Le tube peut avoir une épaisseur allant de 0,10 mm à 1,50 mm, de préférence de 0,15 mm à 1,30 mm, et de façon particulièrement préférée de 0,20 mm à 1,00 mm. De cette façon, le tube est suffisamment épais afin de pouvoir protéger les câbles optiques et suffisamment fin pour ne pas être trop encombrant. Les gammes d'épaisseur du tube permettent également au tube de pouvoir être fabriqué par extrusion lorsqu'il est formé en un matériau polymère.

Le tube peut avoir une forme totalement rectiligne ou peut être rectiligne sur certaines portions et comporter des courbes et/ou coudes sur d'autres portions. Les courbures peuvent présenter de préférence un rayon de courbure d'au moins 10 mm, de préférence d'au moins 15 mm, et de façon particulièrement préférée d'au moins 18 mm.

Le tube peut posséder en outre différentes caractéristiques décrites ci-après lui permettant de répondre à certaines contraintes.

Selon une caractéristique possible, le tube peut posséder un module de Young allant de 450 MPa à 700 MPa, de préférence allant de 470 MPa à 620 MPa, et de façon particulièrement préférée, de 500 MPa à 590 MPa. Le tube possède ainsi une élasticité longitudinale optimisée et peut résister à des contraintes de traction élevées. Les câbles optiques placées à l'intérieur du tube peuvent alors être protégés des contraintes mécaniques exercées sur le tube. Il est ainsi possible d'insérer des câbles optiques améliorés qui comprennent moins d'éléments de protections et qui sont plus légers, ce qui n'est pas possibles avec des tubes connus dans l'art antérieur.

Selon une autre caractéristique possible, le tube peut posséder une résistance à des chocs qu'il peut recevoir, la force de ces chocs pouvant aller jusqu'à 1000 N, de préférence jusqu'à 750 N, et de façon encore plus préférée jusqu'à 500 N. En particulier, le tube ne présente ni cassure, ni déformation suite à un tel choc et les câbles optiques présents à l'intérieur du tube sont ainsi protégés des contraintes mécaniques qui sont appliquées sur le tube. En particulier, lorsque le tube reçoit un choc tel que précédemment décrit, le(s) câble(s) optiques présent(s) à l'intérieur du tube ne présente pas ou peu d'atténuation de leur signal, notamment une atténuation de signal d'au plus 0,3 dB, de préférence d'au plus 0,2 dB, et de façon encore plus préférée d'au plus 0,1 dB.

Selon un mode de réalisation préféré, le tube peut répondre à la norme EN 3745-513 de résistance à l'écrasement.

Le tube peut comporter une couche principale comprenant au moins un premier matériau polymère. Le premier matériau polymère peut comprendre au moins un polymère choisi parmi un polymère d'oléfine, un copolymère élastomère d'éthylène-propylène (EPM), un terpolymère éthylène propylène diène monomère (EPDM), un copolymère d'éthylène et de vinyl ester, un copolymère d'éthylène et d'acrylate, un copolymère d'éthylène et d'alpha-oléfine, un polymère fluoré, un polyimide, et un de leurs mélanges, les dits polymères pouvant être linéaires ou branchés.

Selon un mode de réalisation préféré, le premier matériau polymère peut comprendre au moins un polymère de polyimide pouvant être linéaire, branché, et/ou aromatique et pouvant être choisi parmi les polyétherimides, les polyamideimides, les copolymères de polyétherimide-siloxanes, et un de leurs mélanges.

Le premier matériau polymère peut comprendre au moins 50% en poids de polymère, de préférence au moins 70% en poids de polymère, de manière encore plus préférée au moins 80% en poids de polymère, et de manière encore plus préférée au moins 90% en poids de polymère.

Selon un mode de réalisation préféré, le tube peut comprendre une couche intérieure comprenant au moins un deuxième matériau polymère différent du premier matériau polymère, ladite couche intérieure étant entourée par la couche principale. De préférence, la couche intérieure est la couche qui est au contact des câbles optiques et la différence de coefficient de frottement statique et/ou dynamique entre la surface de la couche intérieure qui est au contact du/des câbles optiques et la surface extérieure du/des câbles optiques est telle que précédemment décrite. Selon ce mode de réalisation, la couche principale n'est pas en contact avec les câbles optiques placés à l'intérieur du tube et elle peut donc servir essentiellement de protection mécanique pour les câbles optiques.

Dans le cas où le tube ne comporte pas de couche intérieure, la couche principale est au contact du/des câbles optiques placés à l'intérieur du tube et la différence de coefficient de frottement statique et/ou dynamique entre la surface intérieure de la couche principale et la surface extérieure du/des câbles optiques est telle que précédemment décrite.

Selon ce mode de réalisation, le deuxième matériau polymère peut comprendre de préférence au moins un polymère fluoré choisi parmi choisi les copolymères obtenus à partir du monomère de tétrafluoroéthylène, et en particulier parmi le polytétrafluoroéthylène (PTFE) ; les copolymères d'éthylène et de propylène fluorés (FEP) comme par exemple les poly(tétrafluoroéthylène-co-hexafluoropropylène) ; les copolymères perfluoroalkoxy (PFA) comme par exemple les copolymères perfluoro(alkylvinyléther)/tétrafluoroéthylène ; les copolymères perfluoro méthoxy (MFA) ; et les poly(éthylène-co-tétrafluoroéthylène) (ETFE) ; et un de leurs mélanges. Les polymères fluorés permettent notamment à la couche intérieure de posséder des valeurs de coefficient de frottement statiques et dynamique suffisamment faibles pour permettre aux câbles optiques de glisser à l'intérieur du tube.

Le deuxième matériau polymère peut comprendre au moins 50% en poids de polymère, de préférence au moins 70% en poids de polymère, de manière encore plus préférée au moins 80% en poids de polymère, et de manière encore plus préférée au moins 90% en poids de polymère.

Selon un mode de réalisation, la couche principale du tube et/ou la couche intérieure peuvent comprendre classiquement des agents additionnels comme par exemple des charges, des pigments, des agents de réticulation, des charges ignifugeantes...

Selon un mode de réalisation préféré, le tube est fabriqué par extrusion. Dans le cas où le tube comprend une couche principale et une couche intérieure, lesdites couches principales et intérieures peuvent être coextrudées.

Selon un autre mode de réalisation possible, le tube peut comprendre une ou plusieurs couches additionnelles, de préférence placées autour de la couche principale et/ou entre la couche intérieure et la couche principale. Les couches additionnelles peuvent comprendre une couche de renfort mécanique par exemple en matériau composite fibre de verre/polymère, une couche de liaison entre la couche principale et la couche intérieure, ou encore une couche de lubrifiant placée à l'intérieur du tube pour favoriser le glissement du câble optique à l'intérieur du tube.

### Le câble optique

Tous types de câble optique peuvent être utilisés dans l'ensemble selon l'invention. Lorsque l'ensemble comprend plusieurs câbles optiques placés dans le tube, ces câbles optiques peuvent être identiques ou différents.

Le câble optique peut comprendre une partie centrale comportant une ou plusieurs fibres optiques, la partie centrale étant entourée d'une enveloppe de protection.

L'enveloppe de protection peut comprendre une gaine de protection qui permet de protéger mécaniquement les fibres optiques contenues dans la partie centrale, notamment contre les forces de compression, de torsion et/ou des chocs pouvant être exercés sur le câble optique.

Selon un mode de réalisation, l'enveloppe de protection peut comprend au moins un troisième matériau polymère comprenant un polymère fluoré.

L'enveloppe de protection peut en outre comprendre un écran textile entouré de la gaine de protection et qui permet notamment un renforcement du câble optique contre les forces de traction pouvant être exercées sur le câble optique.

Le câble optique peut en outre comprendre classiquement une couche de renforcement placée entre la partie centrale et l'enveloppe de protection. La couche de renforcement permet de renforcer le rôle de protection mécanique de l'enveloppe de protection.

Les câbles optiques dit « simplex » possèdent une partie centrale comprenant une unique fibre optique et les câbles optiques multifibres peuvent comprendre de 2 à 48 fibres optiques. Dans la partie centrale, les fibres optiques peuvent être classiquement entourées d'air, de liquide, ou de gel. Dans les câbles optiques destinés à l'aéronautique, les fibres optiques sont de préférence entourées d'air.

Selon un mode de réalisation préféré, le câble optique de l'invention peut être dépourvu de couche de renforcement. Selon ce mode de réalisation, la partie centrale est directement entourée de l'enveloppe de protection qui est donc en contact physique direct avec la partie centrale. De préférence, la couche la plus intérieure de l'enveloppe de protection peut être l'écran textile qui est alors en contact direct avec la partie centrale. Selon un mode de réalisation particulièrement préféré, l'enveloppe peut comprendre uniquement l'écran textile et la gaine de protection et l'écran textile est alors en contact physique direct avec la partie centrale.

Le diamètre d du câble optique peut avoir une valeur allant de 0,9 mm à 6,5 mm, de préférence de 0,9 mm à 5,5 mm, et de façon particulièrement préférée de 0,9 mm à 3 mm. Un tel diamètre est optimisé par rapport à celui du tube et le câble optique peut ainsi être glissé dans le tube lors de son installation et/ou de sa désinstallation en évitant tout pliage ou torsion du câble optique. Il est ainsi possible d'utiliser un câble optique dépourvu de couche de renforcement. En effet, les contraintes mécaniques sur le câble optique lors de son installation étant évitées, la couche de renforcement peut ne pas être nécessaire.

Les valeurs de coefficient de frottement statique et/ou dynamique entre le tube et le câble optique étant faibles, l'installation des câbles optiques est facilitée et le câble optique peut être dépourvu de couche de renforcement.

La gaine de protection peut comprendre au moins un troisième matériau comprenant au moins un troisième polymère choisi parmi un polymère d'oléfine, un copolymère élastomère d'éthylène-propylène (EPM), un terpolymère éthylène propylène diène monomère (EPDM), un copolymère d'éthylène et de vinyl ester, un copolymère d'éthylène et d'acrylate, un copolymère d'éthylène et d'alpha-oléfine, un polymère fluoré, et un de leurs mélanges, les dits polymères pouvant être linéaires ou branchés.

Selon un mode de réalisation préféré, le troisième matériau polymère peut comprendre au moins un polymère fluoré choisi parmi choisi les copolymères obtenus à partir du monomère de tétrafluoroéthylène, et en particulier parmi le polytétrafluoroéthylène (PTFE) ; les copolymères d'éthylène et de propylène fluorés (FEP) comme par exemple les poly(tétrafluoroéthylène-co-hexafluoropropylène) ; les copolymères perfluoroalkoxy (PFA) comme par exemple les copolymères perfluoro(alkylvinyléther)/tétrafluoroéthylène ; les copolymères perfluoro méthoxy (MFA) ; et les poly(éthylène-co-tétrafluoroéthylène) (ETFE) ; et un de leurs mélanges. Les polymères fluorés permettent notamment à la gaine de protection de posséder une différence de coefficient de frottement statique et/ou dynamique avec la surface intérieure du tube suffisamment faible pour permettre aux câbles optiques de glisser facilement à l'intérieur du tube.

Selon un mode de réalisation, le troisième matériau polymère peut comprendre classiquement des agents additionnels comme par exemple des charges, des pigments, des agents de réticulation, des charges ignifugeantes...

La présente invention a pour deuxième objet un réseau de câbles optiques comprenant un ou plusieurs ensembles selon le premier objet de l'invention.

Grâce aux caractéristiques de l'ensemble selon le premier objet de l'invention, un tel réseau présente une grande facilité d'installation et de maintenance.

Ce réseau comprend au moins deux tubes pouvant être de préférence préinstallés sur le lieu d'utilisation du réseau et les câbles optiques sont installés dans les tubes ou au contraire désinstallés en fonction des besoins.

Ce réseau présente l'avantage de comporter des tubes installés dans le lieu voulu et dans la configuration souhaitée et de pouvoir installer, désinstaller des câbles optiques ou encore réaliser des opérations de maintenance sur les câbles optiques sans avoir besoin de bouger les tubes. Un tel réseau est donc particulièrement utile dans des endroits où l'espace est limité.

La présente invention a pour troisième objet l'utilisation d'un ensemble selon le premier objet de l'invention ou d'un réseau selon le deuxième objet de l'invention dans le domaine de l'aéronautique.

Dans un tel domaine, un très grand nombre de câbles optiques doit être installé dans des espaces réduits et encombrés dans lesquels les tubes comportent souvent des pliures ou des courbures. L'ensemble ou le réseau selon l'invention est donc particulièrement adapté dans ce domaine puisqu'ils permettent d'installer les tubes dans la position voulue puis de pouvoir installer ou désinstaller les câbles optiques, ou encore réaliser de la maintenance sur les câbles optique et ce, quelle que soit la position des tubes.

### Brève description des dessins

Les dessins annexés illustrent l'invention :
[Fig. 1] représente une vue en coupe transversale d'un ensemble comprenant un tube et plusieurs câbles optiques selon un mode de réalisation de l'invention ; et
[Fig. 2] représente une vue de face d'un ensemble selon l'invention dans lequel est inséré un câble optique.

### Description de mode(s) de réalisation

Pour des raisons de clarté, seuls les éléments essentiels pour la compréhension des modes de réalisation exposés ci-après ont été représentés de manière schématique, et ceci sans respect de l'échelle.

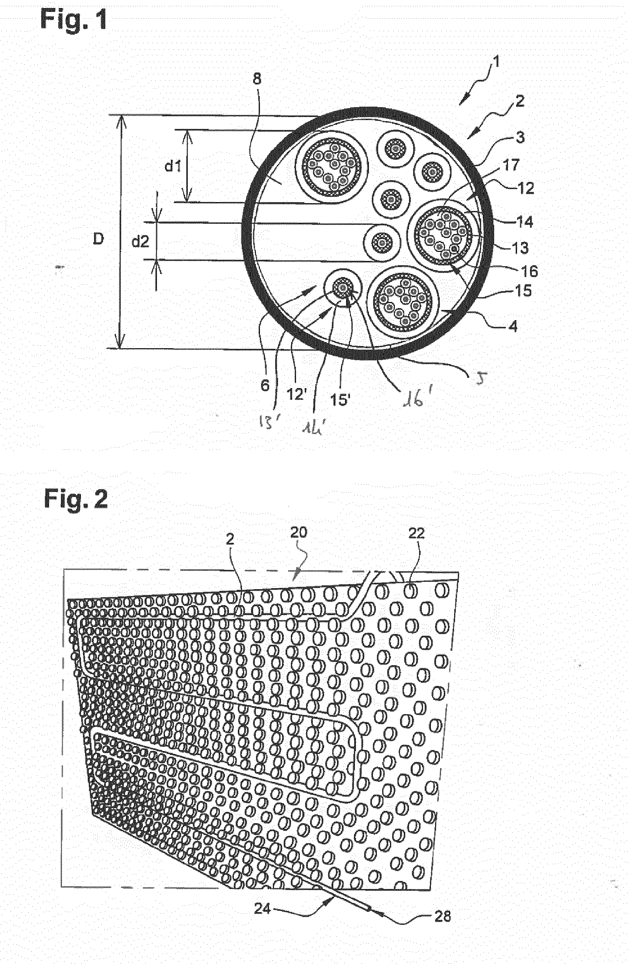

Selon un premier mode de réalisation illustré sur la figure 1, un ensemble 1 selon le premier objet de l'invention comporte un tube 2 ainsi que cinq câbles optiques dit « simplex » 6 et trois câbles optiques multifibres 4.

Le tube 2 comporte une couche principale 3 faite en un premier matériau polymère comprenant un copolymère de polyétherimide siloxane, et une couche intérieure 5 faite en un deuxième matériau polymère comprenant un polymère fluoré. Un espace 8 entre les câbles optiques 4 et 6 est comblé par de l'air.

Les câbles optiques multifibres 4 comprennent une enveloppe de protection 12 entourant une partie centrale 15. L'enveloppe 12 comporte une gaine de protection 14 en un troisième matériau polymère comprenant un copolymère d'éthylène et de propylène fluoré. L'enveloppe 12 comporte également un écran textile 13 placé entre une partie centrale 15 et la gaine de protection 14.

La partie centrale 15 comprend douze fibres optiques 16 qui sont entourées par du gel 17.

Les câbles optiques dit « simplex » 6 comportent une enveloppe 12' comprenant un écran textile 13' et une gaine de protection 14' et une partie centrale 15' comprenant une seule fibre optique 16'.

Le tube 2 possède un diamètre intérieur D d'une valeur de 6 mm. Les câbles optiques multifibres 4 possèdent un diamètre extérieur d1 d'une valeur de 2 mm et les câbles optiques simplex 6 possèdent un diamètre extérieur d2 d'une valeur de 0,9 mm. Le rapport d1/D est donc de 0,33 et le rapport d2/D est donc de 0,15.

La figure 2 illustre un réseau 20 comprenant un ensemble 24 selon un deuxième mode de réalisation de l'invention placé sur une paroi 22. L'ensemble 24 comprend le tube 2 d'une longueur de 25 m ainsi qu'un unique câble optique multifibre 4 non visible.

Le tube 2 est formé par extrusion à partir d'un polymère de polypropylène.

Dans cet exemple de réalisation, le câble optique multifibre 4 est installé dans le tube 2 préalablement installé sur la paroi 22. Le câble optique a pu être glissé dans le tube 2 à partir de l'entrée 28 sur une longueur de 15 mètres, et ce, sans que le câble optique ne soit endommagé.

## Revendications

1. Ensemble (1) comprenant un tube (2) et au moins un câble optique (4, 6), ledit câble optique (4, 6) étant placé à l'intérieur dudit tube (2), l'ensemble (1) étant **caractérisé en ce que** le tube (2) possède un diamètre intérieur D et **en ce que** le câble optique (4, 6) possède un diamètre extérieur d, le rapport d/D allant de 0,10 à 0,80.

2. Ensemble selon la revendication 1, **caractérisé en ce que** le tube (2) possède une surface intérieure ayant un coefficient de frottement dynamique µd1 et **en ce que** le câble optique (4, 6) possède une surface extérieure ayant un coefficient de frottement dynamique µd2, la différence entre µd1 et µd2 ayant une valeur absolue allant de 0,05 à 0,70.

3. Ensemble selon la revendication 1 ou 2, **caractérisé en ce que** le tube (2) possède une surface intérieure ayant un coefficient de frottement statique µs1 et **en ce que** le câble optique (4, 6) possède une surface extérieure ayant un coefficient de frottement statique µs2, la différence entre µs1 et µs2 ayant une valeur absolue allant de 0,05 à 0,70.

4. Ensemble selon l'une quelconque des revendications précédentes, **caractérisé en ce que** le tube (2) comporte une couche principale (3) comprenant au moins un premier matériau polymère.

5. Ensemble selon la revendication 4, **caractérisé en ce que** le tube comprend une couche intérieure (5) comprenant au moins un deuxième matériau polymère différent du premier matériau polymère, ladite couche intérieure (5) étant entourée par la couche principale (3).

6. Ensemble selon la revendication 4 ou 5, **caractérisée en ce que** le premier matériau polymère comprend au moins un polymère de polyimide choisi parmi les polyétherimides, les polyamideimides, les copolymères de polyétherimide-siloxanes, et un de leurs mélanges.

7. Ensemble selon l'une quelconque des revendications précédentes, **caractérisé en ce que** le câble optique (4, 6) comprend une partie centrale (15, 15') comportant une ou plusieurs fibres optiques (16, 16'), la partie centrale (15, 15') étant entourée d'une enveloppe de protection (12, 12').

8. Ensemble selon la revendication 7, **caractérisé en ce que** l'enveloppe de protection (12, 12') comprend au moins un troisième matériau polymère comprenant un polymère fluoré.

9. Ensemble selon la revendication 7 ou 8, **caractérisé en ce que** l'enveloppe de protection (12, 12') comprend un écran textile (13, 13') et une gaine de protection (14, 14'), la gaine de protection entourant l'écran textile.

10. Réseau de câbles optiques **caractérisé en ce qu'**il comprend un ou plusieurs ensembles selon l'une quelconque des revendications 1 à 9.

11. Utilisation d'un ensemble selon l'une quelconque des revendications 1 à 9 ou un réseau selon la revendication 10 dans le domaine de l'aéronautique.
